Europäisches Patentamt

European Patent Office

Office européen des brevets

(19)

(11) Publication number: **0 076 065**
**A1**

(12) # EUROPEAN PATENT APPLICATION

(21) Application number: **82304891.3**

(22) Date of filing: **16.09.82**

(51) Int. Cl.³: **B 64 D 15/20**

(30) Priority: **30.09.81 GB 8129522**

(43) Date of publication of application:
**06.04.83 Bulletin 83/14**

(84) Designated Contracting States:
**DE FR IT SE**

(71) Applicant: **The Secretary of State for Defence in Her Britannic Majesty's Government of The United Kingdom of Great Britain and Northern Ireland Whitehall London SW1A 2HB(GB)**

(72) Inventor: **Barlow, Geoffrey Frederick 102 Manor Road Farnborough Hampshire(GB)**

(72) Inventor: **Jordan, Anthony 13 Upper Gordon Road Camberley Surrey(GB)**

(72) Inventor: **Curtiss, Raymond Keith 2 Wylye Close Quidhampton Salisbury Wiltshire(GB)**

(74) Representative: **Miller, Ronald Anthony et al, Procurement Executive, Ministry of Defence Patents 1A4, Room 2014 Empress State Building Lillie Road London SW6 1TR(GB)**

(54) Improvements in ice accretion instrumentation.

(57) It having been noted that snow accretes almost instantaneously while supercooled water (ice) builds up in linear fashion, instrumentation is provided hereby which, by differentiating the signal from an ice-accretion probe (10), is able to distinguish between ice and snow accretion and signal to that effect. As a result a helicopter pilot for example can select the appropriate deicing modes and save energy and or deicing fluid.

*Fig.4.*

EP 0 076 065 A1

# IMPROVEMENTS IN ICE ACCRETION INSTRUMENTATION

The present invention relates to ice accretion detectors, that is in particular, icing detectors employed on aircraft especially helicopters to give a warning that deicing apparatus should be switched on.

A known ice detector employs a probe arranged to protrude from an aircraft surface into an airflow and an optical device for observing the amount of accretion on the probe.

The present invention provides accretion detection apparatus which discriminates between snow and ice accretion.

According to the present invention, therefore, accretion detection apparatus comprises:

a probe for protruding into an airflow,

viewing means for observing accretion on the probe, and for passing an electrical signal representing rate of accretion, and

means for differentiating the signal to obtain a signal representing rate of change of accretion rate. The apparatus may also incorporate monostable means for triggering an indicator that snow is being accreted.

It will be appreciated that the invention stems from the inventors' discovery that the rates of accretion on an ice detector differ considerably and repeatably dependent on whether it is snow or ice which is accreting. The value of apparatus for distinguishing between snow and ice accretion is that different means of disposing of the accretion can be employed and saving obtained of energy and perhaps de-icing fluid. For example, a helicopter pilot would need to employ deicing on both his engine intakes and the rotor blades in the event of ice accretion, but not on the rotor blades in the event of snow accretion.

In a typical known accretion measuring apparatus ice is allowed to accrete until a certain thickness is detected, and it is then shed by heating the probe surface. (The time taken from commencement of an accretion measuring cycle until shedding may provide a basis for deriving a rate signal.) During shedding of the ice it is possible that the apparatus will detect an ice accretion rate similar to that normally experienced in snow. To cater for this the apparatus may include discrimination means, for example, means inhibiting the detector signal output during a deicing part of the cycle.

The apparatus may incorporate integrating means for indicating quantity of snow detected within a given time period, for example comprising a capacitor with an appropriate decay rate characteristic, and an associated indicator.

Accretion detection apparatus in accordance with the invention will now be described by way of example with reference to the accompanying drawings, of which:

Figure 1 is a graph of a typical accretion of supercooled water,

Figure 2 is a graph of a typical accretion of supercooled water and snow,

3

Figure 3 is a graph of a typical accretion of snow alone, and

Figure 4 is a block electrical circuit diagram of the apparatus.

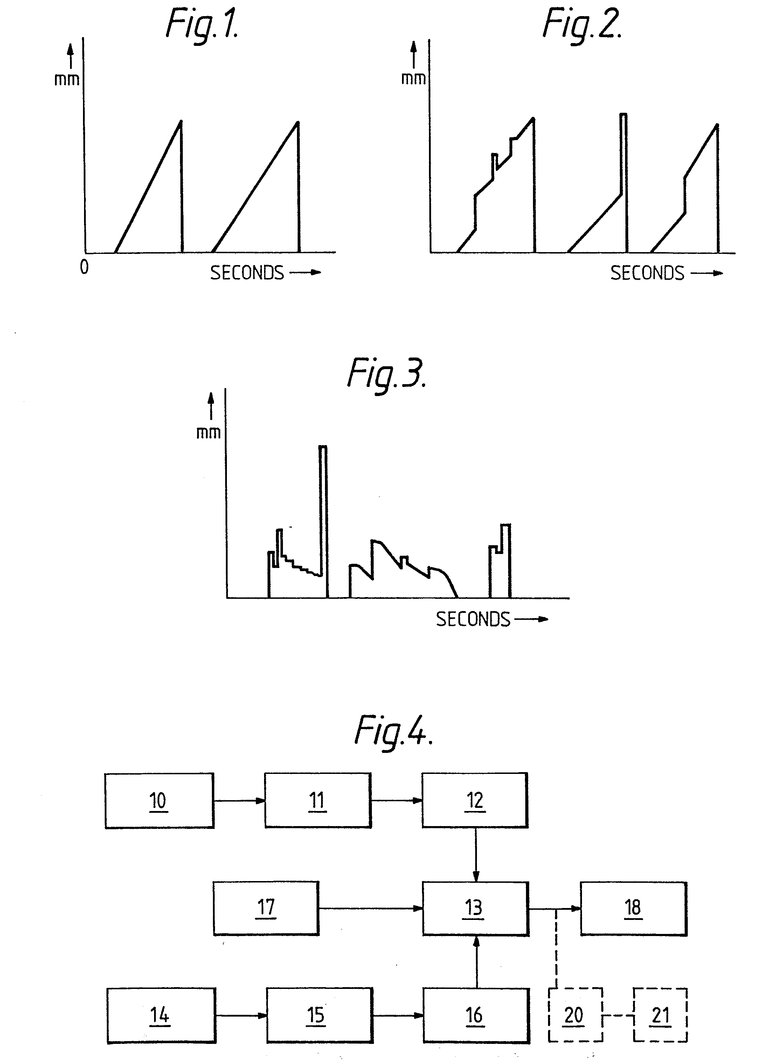

Figures 1 to 3 demonstrate that supercooled water (ice) accretes on a probe in substantially a linear fashion with time, whereas snow accretes substantially instantaneously.

As shown in Figure 4 a probe 10 arranged for producing a voltage analog of ice accretion is connected via a buffer filter 11 and a differentiator 12 to the input of a monostable 13. Similarly the output of a de-ice signal generator 14 is connected via a monostable 15 and an inhibitor 16 to an input of the monostable 13. Also connected to an input of the monostable 13 is a trip level setting device 17, while the output of the monostable 13 is connected to a snow indicator 18.

In operation of the apparatus, with the monostable 13 set by the device 17 to trip when a substantially instantaneous accretion rate is detected, signals from the probe 10 are differentiated at 12 and passed to the monostable 13. If the de-icing of the probe is on, this is detected by the monostable 15 which initiates the inhibitor 16 and prevents the monostable 13 from passing a 'snow warning' signal to the indicator 18. In the event that the probe de-icing is not on the inhibitor 16 is not triggered, and if a sufficient high accretion rate signal is passed to the monostable 13 it will initiate a 'snow warning' signal on the indicator 18.

In an alternative embodiment of the invention the apparatus includes an integrator 20 of the output of the monostable 13, and an associated indicator 21, the integrator comprising a capacitor with an appropriate decay characteristic, whereby a continuous detection of snow over a given

4

period will give rise to snow quantity indications on the indicator 21.

CLAIMS

1.. Accretion detection apparatus comprising:

a probe for protruding into an airflow,

viewing means for observing accretion on the probe, and for passing an electrical signal representing rate of accretion, and

means for differentiating the signal to obtain a signal representing rate of change of accretion rate.

2. Apparatus as claimed in claim 1 and incorporating monostable means for triggering an indicator that snow is being accreted.

3. Apparatus as claimed in claim 1 or claim 2 and having discriminator means.

4. Apparatus as claimed in claim 3 and wherein the discriminator means comprises means inhibiting the detector signal output during a deicing part of the cycle.

5. Apparatus as claimed in claim 2 and having integrator means arranged to integrate the output of the monostable.

6. Apparatus substantially as hereinbefore described with reference to the accompanying drawings.

0076065

*Fig.1.*

*Fig.2.*

*Fig.3.*

*Fig.4.*

## DOCUMENTS CONSIDERED TO BE RELEVANT

| Category | Citation of document with indication, where appropriate, of relevant passages | Relevant to claim | CLASSIFICATION OF THE APPLICATION (Int Cl. ³) |
|---|---|---|---|
| X | US-A-3 940 622 (STALLABRASS)<br>* column 5, line 36 to column 6, line 17; column 6, lines 57-68; column 7, lines 4-7; column 6, lines 29-31 * | 1-6 | B 64 D 15/20 |

TECHNICAL FIELDS SEARCHED (Int. Cl. ³)

B 64 D 15/00

The present search report has been drawn up for all claims

| Place of search<br>THE HAGUE | Date of completion of the search<br>16-11-1982 | Examiner<br>HAUGLUSTAINE H.P.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82